(19) Europäisches Patentamt
European Patent Office
Office européen des brevets

(11) EP 3 369 850 A1

(12) EUROPEAN PATENT APPLICATION
published in accordance with Art. 153(4) EPC

(43) Date of publication:
05.09.2018 Bulletin 2018/36

(51) Int Cl.:
D04B 1/04 (2006.01)        D01F 6/18 (2006.01)
D03D 27/00 (2006.01)

(21) Application number: 16859886.0

(22) Date of filing: 27.10.2016

(86) International application number:
PCT/JP2016/081861

(87) International publication number:
WO 2017/073657 (04.05.2017 Gazette 2017/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.10.2015 JP 2015215143

(71) Applicant: KANEKA CORPORATION
Osaka-shi, Osaka 530-8288 (JP)

(72) Inventors:
• MICHINOBU Takao
  Takasago-shi, Hyogo 676-8688 (JP)
• MIO Wataru
  Takasago-shi, Hyogo 676-8688 (JP)
• KURODA Minoru
  Osaka-shi, Osaka 530-8288 (JP)

(74) Representative: Vossius & Partner
Patentanwälte Rechtsanwälte mbB
Siebertstrasse 3
81675 München (DE)

(54) PILE FABRIC

(57) The present invention relates to a pile fabric including a long pile portion and a short pile portion. The long pile portion includes modified cross-section fibers A having one or more cross-sectional shapes selected from the group consisting of C-shaped cross-sectional shapes and H-shaped cross-sectional shapes, and having a single fiber fineness of 15 to 60 dtex. Preferably, both of fibers constituting the long pile portion and fibers constituting the short pile portion are modacrylic fibers. Thus, the present invention provides pile fabrics having an animal hair-like appearance in which the presence of guard hairs is emphasized visually and tactilely.

FIG. 6

**Description**

Technical Field

The present invention relates to pile fabrics that can be used as artificial furs.

Background Art

Recently, it has been proposed to refrain from using natural furs for protection of natural environment, and instead use pile fabrics that are made to look like natural furs as artificial furs. Generally, the piloerection portions of natural furs are constituted by fibers whose tips are narrower than the root portions. Natural furs have a two-layered structure of guard hair (also called harsh hair) and down hair (also called downy soft hair). The constitution of the piloerection portions by the fibers whose tips are narrower than the root portions provides natural furs with voluminousness, recovering properties, and soft hand of the front surfaces, which are textures peculiar to natural furs. For the pile fabrics to be used as artificial furs, various techniques have been proposed to configure pile portions to have a two-layered structure to make the pile fabrics resemble the structure of natural furs while imparting, to the pile fabrics, textures resembling natural furs.

For example, Patent Document 1 proposes a pile fabric including fibers having a modified cross-sectional shape and a controlled fineness in a guard hair portion. Patent Document 2 proposes a pile fabric constituted by short piles that are shrinkable fibers with dyed pile portions and long piles that are non-shrinkable fibers having a flat cross section or an oval cross section. Patent Document 3 proposes a pile fabric including fibers having a flat cross-sectional shape in a short pile portion and fibers having a fineness of 0.7 to 8 dtex in a long pile portion, wherein a ratio of the fineness of fibers constituting the long pile portion and the fineness of fibers constituting the short pile portion is set within a specific range.

Prior Art Documents

Patent Documents

Patent Document 1: JP H10(1998)-158959 A
Patent Document 2: JP H08(1996)-260289 A
Patent Document 3: WO 2004/009891

Disclosure of Invention

Problem to be Solved by the Invention

However, in the pile fabrics of Patent Documents 1 to 3, the presence of guard hairs is weak visually and tactilely, and an animal hair-like appearance is not sufficiently expressed.
In order to solve the above conventional problems, the present invention provides pile fabrics having an animal hair-like appearance in which the presence of guard hairs is emphasized visually and tactilely.

Means for Solving Problem

The present invention relates to a pile fabric that includes a long pile portion and a short pile portion. The long pile portion includes modified cross-section fibers A having one or more cross-sectional shapes selected from the group consisting of C-shaped cross-sectional shapes and H-shaped cross-sectional shapes, and having a single fiber fineness of 15 to 60 dtex.
Preferably, both of fibers constituting the long pile portion and fibers constituting the short pile portion are one or more fibers selected from acrylic fibers and modacrylic fibers. Preferably, the fibers constituting the short pile portion have a single fiber fineness of 1 to 15 dtex. Preferably, the content of the modified cross-section fibers A in a total weight of fibers constituting pile portions is 5 to 50% by weight.
Preferably, the long pile portion has a longer average pile length than the short pile portion by 5 to 60 mm.

Effect of the Invention

The present invention provides pile fabrics having an animal hair-like appearance in which the presence of guard hairs is emphasized visually and tactilely.

Brief Description of Drawings

[FIG. 1] FIG. 1 is a cross-sectional photograph (SEM photograph, 150x magnification) of fibers (having a C-shaped cross-sectional shape) used as guard hairs in Example 1.
[FIG. 2] FIG. 2 is a cross-sectional photograph (SEM photograph, 350x magnification) of fibers (having a flat cross-sectional shape) used as guard hairs in Comparative Example 1.
[FIG. 3] FIG. 3 is a cross-sectional photograph (SEM photograph, 150x magnification) of fibers having a six-lobed cross-sectional shape.
[FIG. 4] FIG. 4 is a cross-sectional photograph (SEM photograph, 150x magnification) of fibers having a Y-shaped cross-sectional shape.
[FIG. 5] FIG. 5 is a cross-sectional photograph (SEM photograph, 250x magnification) of fibers having a C-shaped cross-sectional shape.
[FIG. 6] FIG. 6 is a schematic cross-sectional view illustrating C-shaped cross-sectional shapes in modified cross-section fibers A.
[FIG. 7] FIG. 7 is a schematic cross-sectional view illustrating H-shaped cross-sectional shapes in modified cross-section fibers A.
[FIG. 8] FIG. 8 is a schematic cross-sectional view for explaining a method for evaluating the stiffness of fibers.

Description of the Invention

The present inventors conducted numerous studies to find a way to visually and sensuously emphasize the presence of fibers constituting a long pile portion (guard hairs) in pile fabrics that include a long pile portion and a short pile portion, so as to impart an animal hair-like appearance to the pile fabrics. As a result, the inventors found that incorporation of modified cross-section fibers A having one or more cross-sectional shapes selected from the group consisting of C-shaped cross-sectional shapes and H-shaped cross-sectional shapes and having a single fiber fineness of 15 to 60 dtex into the long pile portion enables production of pile fabrics having an animal hair-like appearance in which the presence of guard hairs is emphasized visually and tactilely, and thus achieved the present invention.

In the pile fabric of the present invention, a pile portion includes a long pile portion and a short pile portion having different pile lengths. In the present invention, the pile portion refers to a piloerection portion excluding a base fabric (also called a ground structure) portion of the pile fabric. The pile length refers to a length from the root to the tip of the piloerection portion.

The average pile length of the long pile portion is longer than the average pile length of the short pile portion, by preferably 5 to 60 mm, more preferably 5 to 50 mm, and further preferably 10 to 45 mm. When the difference in the average pile length between the long pile portion and the short pile portion is within the above-described range, a two-layered structure can be configured that strongly resembles natural furs. In the present invention, the average pile length is determined by vertically standing fibers constituting the pile portion of a pile fabric so as to align piles, measuring the lengths from the roots of the fibers constituting the pile portion of the pile fabric (roots on the front surface side of the pile fabric) to the tips of the piles at 10 sections in each pile portion, and averaging the measured lengths.

The average pile length of the long pile portion is preferably 10 to 120 mm, more preferably 10 to 100 mm, and further preferably 15 to 100 mm, from the viewpoint of easily obtaining products resembling natural furs (also called real furs). The average pile length of the short pile portion is preferably 5 to 70 mm, more preferably 10 to 50 mm, and further preferably 10 to 30 mm, from the viewpoint of easily obtaining products resembling natural furs.

In the present invention, when a plurality of pile portions having different pile lengths are present, a pile portion having a longest average pile length is regarded as a long pile portion, whereas a pile portion having a shortest average pile length is regarded as a short pile portion. Here, "pile portions having different pile lengths" means that the average pile lengths of the respective pile portions differ from each other by 5 mm or more. The pile fabric of the present invention may be a pile fabric with three or more levels, e.g., a pile fabric including a medium-length pile portion in addition to the long pile portion and the short pile portion. From the viewpoint of resembling an appearance of natural furs, a pile fabric with two levels composed of a long pile portion and a short pile portion or a pile fabric with three levels composed of a long pile portion, a short pile portion, and a medium pile portion are preferred. In the present invention, the fibers constituting the long pile portion are guard hairs, and the fibers constituting the short pile portion and the medium pile portion are down hairs. All of the long pile portion, the medium pile portion, and the short pile portion may be constituted by a single kind of fibers, or two or more kinds of fibers.

In the present invention, incorporation of the modified cross-section fibers A into the long pile portion emphasizes the presence of the fibers constituting the long pile portion as guard hairs visually and tactilely. The content of the modified cross-section fibers A in the total weight of the fibers constituting the pile portion is preferably 5 to 50 wt%, more preferably 10 to 45 wt%, and further preferably 10 to 35 wt%, from the viewpoint of emphasizing the presence of guard hairs visually and tactilely. Within the above-described range of the content of the modified cross-section fibers A, the presence of the fibers constituting the long pile portion as guard hairs is easily emphasized visually and tactilely; besides, the pile fabric can have a soft and flexible texture. The modified cross-section fibers A may be fibers of a single kind, or fibers of two or more kinds.

The modified cross-section fibers A have one or more cross-sectional shapes selected from the group consisting of C-shaped cross-sectional shapes and H-shaped cross-sectional shapes. Preferably, the modified cross-section fibers A have C-shaped cross-sectional shapes, from the viewpoint of achieving high stiffness and an excellent presence as guard hairs visually and tactilely.

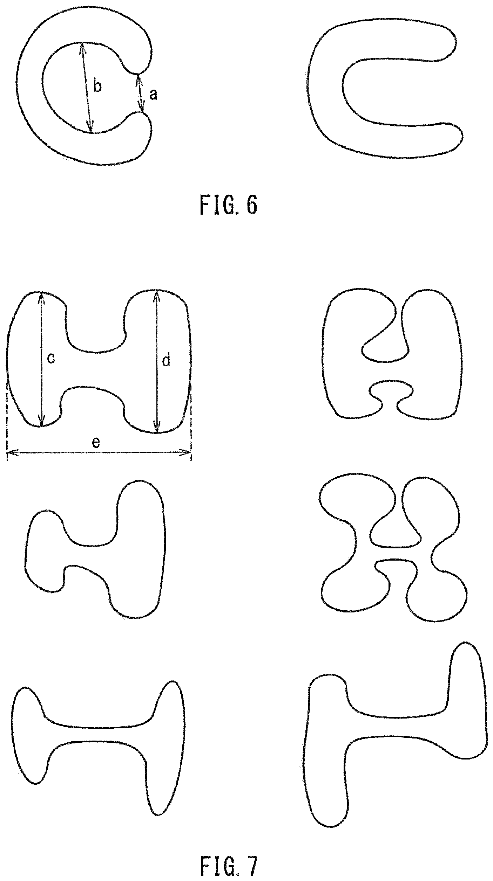

In the modified cross-section fibers A, the C-shaped cross-sectional shapes include substantially C shapes that are deformed C shapes. FIG. 6 illustrates typical C-shaped cross-sectional shapes. Any shape that has the shape of a letter C or that resembles the shape of a letter C is regarded as a C-shaped cross-sectional shape. A relationship between a length $a$ of an opening and an inner diameter $b$ in FIG. 6 is not limited particularly, but preferably satisfies $a/b \leq 1$, from the viewpoint of emphasizing the presence as guard hairs visually and tactilely and expressing the feeling of standing hairs. As illustrated in FIG. 6, in the C-shaped cross-sectional shape, the length $a$ of the opening is a shortest distance in a part corresponding to the opening of the C shape and the inner diameter $b$ is a length of a line segment that indicates a longest distance in a hollow of the C shape and that is parallel to a line segment indicating the shortest distance.

In the modified cross-section fibers A, the H-shaped cross-sectional shapes include substantially H shapes that are deformed H shapes. FIG. 7 illustrates typical H-shaped cross-sectional shapes. Any shape that has the shape of a letter H or that resembles the shape of a letter H is regarded as an H-shaped cross-sectional shape, and parts corresponding to two vertical lines of H do not need to have a uniform thickness. A part corresponding to one horizontal line of H does not need to extend from the middles of the two vertical lines or does not need to extend from the same locations, and may be asymmetrical. A relationship between a total length ($c + d$) of the parts corresponding to two vertical lines of H in FIG. 7 and a length e of the part corresponding to one horizontal line of H is not limited particularly, but preferably satisfies ($c + d$)/$e \geq 0.5$, from the viewpoint of emphasizing the presence as guard hairs visually and tactilely and expressing the feeling of standing hairs. As illustrated in FIG. 7, in the H-shaped cross-sectional shape, the lengths $c$ and $d$ of the vertical lines indicate longest distances in the parts corresponding to two vertical lines in the alphabet H, and the length e of the horizontal line indicates a longest distance in the part corresponding to the horizontal line in the alphabet H.

The modified cross-section fibers A have a single fiber fineness of 15 dtex or more, preferably 20 dtex or more, and further preferably 25 dtex or more, from the view point of achieving an excellent presence as guard hairs visually and tactilely. The modified cross-section fibers A have a single fiber fineness of 60 dtex or less, preferably 55 dtex or less, more preferably 53 dtex or less, even more preferably 51 dtex or less, much more preferably 45 dtex or less, further preferably 40 dtex or less, and still further preferably 35 dtex or less, from the view point of imparting a soft and flexible texture to a pile fabric.

The long pile portion may be constituted by the modified cross-section fibers A only, or may contain other fibers in addition to the modified cross-section fibers A, as long as the object of the present invention is not impaired. The cross-sectional shape of the other fibers is not limited particularly, and examples thereof include a circular shape, an oval shape, a flat shape, a Y shape, an X shape, and a multilobed shape. The other fibers may be a single kind, or two or more kinds. The other fibers have a single fiber fineness of, though not limited particularly to, preferably 60 dtex or less, more preferably 55 dtex or less, even more preferably 53 dtex or less, much more preferably 51 dtex or less, further preferably 45 dtex or less, still further preferably 40 dtex or less, and still further preferably 35 dtex or less, from the view point of imparting a soft and flexible texture to a pile fabric.

In the long pile portion, the content of the modified cross-section fibers A in the total weight of the fibers constituting the long pile portion is preferably 20 wt% or more, more preferably 25 wt% or more, and further preferably 30 wt% or more, from the viewpoint of emphasizing the presence of the fibers constituting the long pile portion as guard hairs visually and tactilely.

The fibers constituting the short pile portion have a single fiber fineness of, though not limited particularly to, preferably 1 to 15 dtex, more preferably 1.5 to 13 dtex, and further preferably 2 to 12 dtex. When the fibers constituting the short pile portion have a single fiber fineness of 1 dtex or more, the workability in carding and the like improves, and single fibers in a form of a pile fabric are prevented from converging on each other, whereby the quality of the pile fabric improves. When the fibers constituting the short pile portion have a single fiber fineness of 15 dtex or less, a pile fabric as a whole can have a soft texture.

The cross-sectional shape of the fibers constituting the short pile portion is not limited particularly, and examples thereof include a circular shape, an oval shape, a flat shape, a Y shape, an X shape, and a multilobed shape. Among these, an oval shape and/or a flat shape are preferred, from the viewpoint of the voluminousness and recovering properties. The fibers constituting the short pile portion may be a single kind, or two or more kinds.

In the present invention, the fibers constituting the pile portion (hereinafter, also referred to as pile fibers) are not limited particularly, and fibers that are generally used for pile fabrics, including acrylic fibers, modacrylic fibers, polyester-based fibers, and vinyl chloride-based fibers, can be used. Preferably, both of the fibers constituting the long pile portion and the fibers constituting the short pile portion are acrylic fibers and/or modacrylic fibers (also called acrylic-based fibers), from the viewpoint of obtaining a flexible texture. In other words, preferably, the modified cross-section fibers A are also acrylic fibers and/or modacrylic fibers. In the present invention, the acrylic fibers are fibers made up of a polymer obtained by polymerizing a composition containing acrylonitrile in an amount of 85 wt% or more and other copolymerizable monomers in an amount of 15 wt% or less. The modacrylic fibers are fibers made up of a polymer obtained by polymerizing a composition containing acrylonitrile in an amount of 35 wt% or more and less than 85 wt% and other copolymerizable monomers in an amount of more than 15 wt% and 65 wt% or less.

In the present invention, there is no particular limitation on the copolymerizable monomers as long as they can be copolymerized with acrylonitrile. Examples of the copolymerizable monomers include: vinyl halides represented by vinyl chloride and vinyl bromide; vinylidene halides represented by vinylidene chloride and vinylidene bromide; sulfonic acid-containing monomers represented by allylsulfonic acid, methallylsulfonic acid, styrenesulfonic acid, isoprenesulfonic acid, 2-acrylamido-2-methylpropanesulfonic acid, and their metal salts and amine salts; lower alkyl esters of acrylic acid and methacrylic acid, N-alkyl substituted aminoalkyl esters, N,N-alkyl substituted aminoalkyl esters and glycidyl esters ; acrylamide, methacrylamide, and their N-alkyl substituted products and N,N-alkyl substituted products; anionic vinyl monomers such as carboxyl group-containing vinyl monomers represented by acrylic acid, methacrylic acid and itaconic acid and their sodium, potassium or ammonium salts; cationic vinyl monomers represented by quaternary aminoalkyl esters of acrylic acid and quaternary aminoalkyl esters of methacrylic acid; vinyl group-containing lower alkyl ethers; vinyl group-containing lower carboxylic acid esters represented by vinyl acetate; and styrene. These monomers may be used alone or in a combination of two or more kinds.

As the copolymerizable monomers, it is preferable to use one or more kinds of monomers selected from the group consisting of vinyl halides, vinylidene halides, and metal salts of sulfonic acid-containing monomers, and it is more preferable to use one or more kinds of monomers selected from the group consisting of vinyl chloride, vinylidene chloride, and sodium styrenesulfonate.

The pile fibers are more preferably modacrylic fibers, and further preferably modacrylic fibers obtained by polymerizing a composition containing acrylonitrile in an amount of 35 wt% or more and less than 85 wt%, and vinyl chloride and/or vinylidene chloride and other copolymerizable monomers in a total amount of more than 15 wt% and 65 wt% or less.

In the present invention, both of the fibers constituting the long pile portion and the fibers constituting the short pile portion may be non-shrinkable fibers that have been cut into different fiber lengths in advance to express the difference in level in a pile fabric; or the fibers constituting the long pile portion may be non-shrinkable fibers and the fibers constituting the short pile portion may be shrinkable fibers, and the fibers constituting the short pile portion are shrunk in heat treatment during the production of a pile fabric to express the difference in level in the pile fabric. In the present invention, the non-shrinkable fibers refer to fibers having a dry heat shrinkage of less than 10%, and the shrinkable fibers refer to fibers having a dry heat shrinkage of 10% or more. The dry heat shrinkage is determined by measuring the lengths of fibers before and after heat treatment under a load of $8.83 \times 10^{-3}$ cN/dtex and substituting the measured lengths into the following formula. The heat treatment is performed under a dry heat atmosphere of 130°C for 20 minutes without load.

$$\text{Dry heat shrinkage (\%)} = [(\text{Fiber length before heat treatment}) - (\text{Fiber length after heat treatment}) / \text{Fiber length before heat treatment}] \times 100$$

An organically-modified silicone-based softener that is at least one selected from the group consisting of amino-modified silicone-based softeners, epoxy-modified silicone-based softeners, and carboxyl-modified silicone-based softeners may be adhered to the pile fibers. Such an organically-modified silicone-based softener can improve the flexibility of a pile fabric. Preferably, the organically-modified silicone-based softener is an amino-modified silicone-based softener from the viewpoint of more effectively preventing pile fibers from falling off while improving the flexibility of a pile fabric.

When the pile fibers of the pile fabric are acrylic fibers and/or modacrylic fibers, the back surface side of the pile fabric may be subjected to heat sensitive sealing from the viewpoint of preventing fibers from falling off. Preferably, the pile fibers have a lower softening point than fibers (ground yarns) constituting the ground structure, from the viewpoint of preventing fusion of pile fibers of the piloerection portion. If the pile fibers includes a plurality of fibers having different softening points, the difference in the softening point between pile fibers having a highest softening point and the fibers constituting the ground structure is preferably 10°C or more, more preferably 20°C or more, and particularly preferably 30°C or more.

When the pile fibers are acrylic fibers and/or modacrylic fibers, the fibers constituting the ground structure may be polyester-based fibers such as polyethylene terephthalate fibers.

An adhesive resin composition may be adhered to the back surface (non-piloerection surface) of the pile fabric by back coating from the viewpoint of making the back surface of the pile fabric more flexible. For example, the adhesive resin composition may be a composition containing one or more adhesive resins selected from the group consisting of styrene-butadiene rubbers (SBR), acrylonitrile-butadiene rubbers (NBR), vinyl acetate-based resins, acrylic ester-based resins, and polyurethane-based resins. Among these, compositions containing one or more acrylic ester-based resins are preferably used.

Examples

Hereinafter, the present invention will be described more specifically by way of examples. Note that the present invention is not limited to the examples below.

The stiffnesses of the following modacrylic fibers were measured in the manner described below. Table 1 below shows the results.

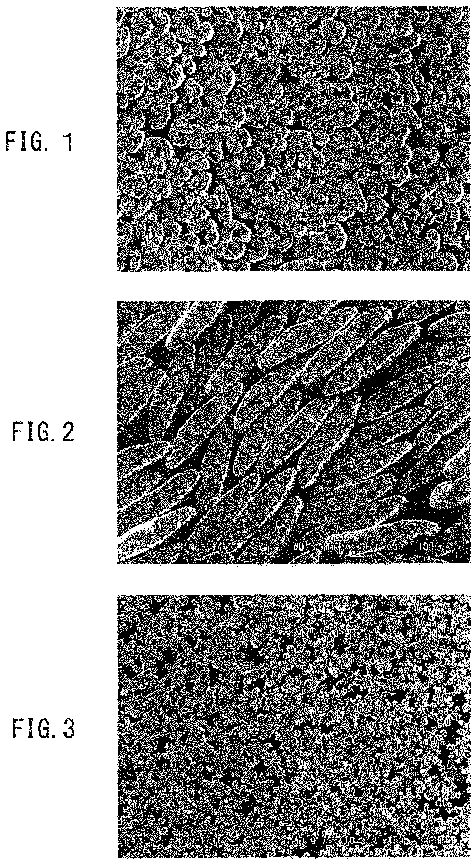

(1) Modacrylic fibers 1: modacrylic fibers (a copolymer composed of 49 wt% of acrylonitrile, 50 wt% of vinyl chloride, and 1 wt% of sodium styrenesulfonate) having a C-shaped cross-sectional shape, a softening point of 180 to 190°C, a single fiber fineness of 27 dtex, and a dry heat shrinkage of 2%; FIG. 1 is a cross-sectional photograph of the modacrylic fibers 1.

(2) Modacrylic fibers 2: modacrylic fibers (a copolymer composed of 49 wt% of acrylonitrile, 50 wt% of vinyl chloride, and 1 wt% of sodium styrenesulfonate) having a flat cross-sectional shape, a softening point of 180 to 190°C, a single fiber fineness of 27 dtex, and a dry heat shrinkage of 2%; FIG. 2 is a cross-sectional photograph of the modacrylic fibers 2.

(3) Modacrylic fibers 3: modacrylic fibers (a copolymer composed of 49 wt% of acrylonitrile, 50 wt% of vinyl chloride, and 1 wt% of sodium styrenesulfonate) having a six-lobed cross-sectional shape, a softening point of 180 to 190°C, a single fiber fineness of 27 dtex, and a dry heat shrinkage of 2%; FIG. 3 is a cross-sectional photograph of the modacrylic fibers 3.

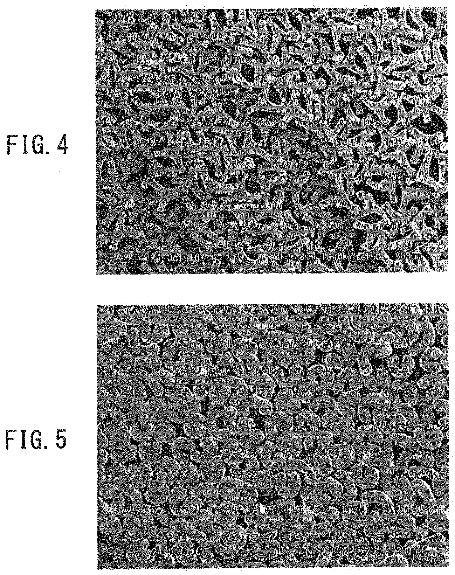

(4) Modacrylic fibers 4: modacrylic fibers (a copolymer composed of 49 wt% of acrylonitrile, 50 wt% of vinyl chloride, and 1 wt% of sodium styrenesulfonate) having a Y-shaped cross-sectional shape, a softening point of 180 to 190°C, a single fiber fineness of 27 dtex, and a dry heat shrinkage of 2%; FIG. 4 is a cross-sectional photograph of the modacrylic fibers 4.

(5) Modacrylic fibers 5: modacrylic fibers (a copolymer composed of 49 wt% of acrylonitrile, 50 wt% of vinyl chloride, and 1 wt% of sodium styrenesulfonate) having a C-shaped cross-sectional shape, a softening point of 180 to 190°C, a single fiber fineness of 10 dtex, and a dry heat shrinkage of 2%; FIG. 5 is a cross-sectional photograph of the modacrylic fibers 5.

(Stiffness of Fibers)

(1) One ends of 20 fibers (non-crimped fibers, cut length: 200 mm) were arranged at regular intervals and fixed with a tape (JOINTEX, trade name "Smart Value, Cloth Tape, Super Economy S", width 20 mm, length 20 mm) to obtain a fiber bundle (the fiber length of the measuring part: 150 mm). In the fiber bundle, only one ends of the fibers were adhered to the same tape, and the fibers did not overlap with each other.

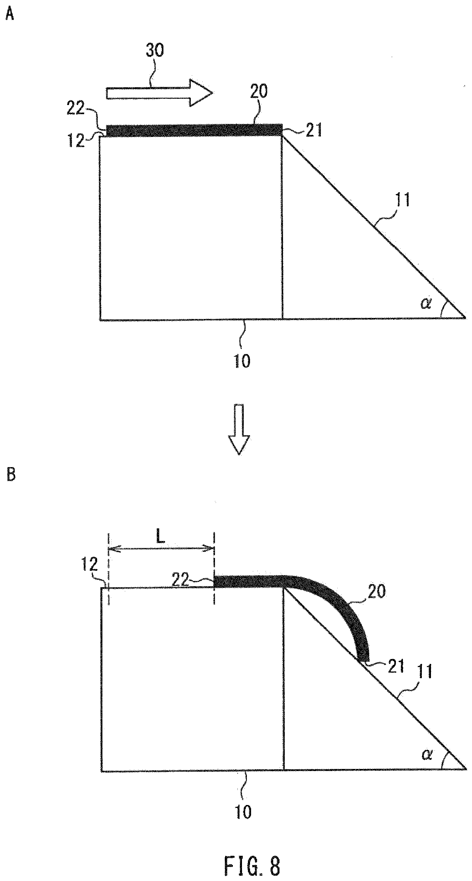

(2) As illustrated in FIG. 8A, a fiber bundle 20 was arranged on a laboratory table 10 made from melamine resin having an inclined surface 11 and a horizontal surface 12 (angle $\alpha$ = 45°) (the length of the inclined surface 11:150 mm, the length of the horizontal surface 12:200 mm and the width: 100 mm). Next, an end 22 of the fiber bundle 20 adhered to the tape was pushed along a direction indicated by an arrow 30 to gradually slide the fiber bundle 20 out of the horizontal surface 12.

(3) As illustrated in FIG. 8B, the fiber bundle 20 was slid until the other end 21 of the fiber bundle 20 extending out of the horizontal surface 12 curved downward and came into contact with the inclined surface 11.

(4) A distance L of the fiber bundle 20 sliding on the horizontal surface 12 of the laboratory table 10 was measured to determine the stiffness of the fibers. As the value of the stiffness of the fibers increases, the fibers are harder and more excellent in the feeling of standing hairs and the firmness.

[Table 1]

| Number | Cross-sectional shape | Single fiber fineness (dtex) | Stiffness (mm) |
|---|---|---|---|
| Modacrylic fibers 1 | C shape | 27 | 80 |
| Modacrylic fibers 2 | Flat shape | 27 | 45 |
| Modacrylic fibers 3 | Six-lobed shape | 27 | 65 |
| Modacrylic fibers 4 | Y shape | 27 | 70 |
| Modacrylic fibers 5 | C shape | 10 | 40 |

It can be understood from the results of Table 1 above that, when the single fiber finenesses are the same, the modacrylic fibers having a C-shaped cross-sectional shape have higher stiffness than the modacrylic fibers having a flat cross-sectional shape, the modacrylic fibers having a six-lobed cross-sectional shape, and the modacrylic fibers having a Y-shaped cross-sectional shape. Therefore, the presence of the modacrylic fibers having a C-shaped cross-sectional shape is excellent as guard hairs visually and tactilely.

The following are fibers used in examples and comparative examples.

<Fibers>

1. Pile fibers (guard hairs)

(1) Pile fibers 1: The modacrylic fibers 1 were crimped and cut into a length of 60 mm for use. Fibers having a C-shaped cross section of $a/b \leq 1$ accounted for 70% in the pile fibers 1.
(2) Pile fibers 2: The modacrylic fibers 1 were crimped and cut into a length of 76 mm for use. Fibers having a C-shaped cross section of $a/b \leq 1$ accounted for 70% in the pile fibers 2.
(3) Pile fibers 3: The modacrylic fibers 2 were crimped and cut into a length of 102 mm for use.
(4) Pile fibers 4: The modacrylic fibers 2 were crimped and cut into a length of 76 mm for use.
(5) Pile fibers 5: The modacrylic fibers 5 were crimped and cut into a length of 60 mm for use. Fibers having a C-shaped cross section of $a/b \leq 1$ accounted for 60% in the pile fibers 5.

2. Pile fibers (down hairs)

(1) Pile fibers 6: modacrylic fibers (a copolymer composed of 49 wt% of acrylonitrile, 50 wt% of vinyl chloride, and 1 wt% of sodium styrenesulfonate) having a flat cross-sectional shape, a softening point of 180 to 190°C, a single fiber fineness of 5.6 dtex, a dry heat shrinkage of 30%, and a cut length after crimping of 51 mm
(2) Pile fibers 7: modacrylic fibers (a copolymer composed of 49 wt% of acrylonitrile, 50 wt% of vinyl chloride, and 1 wt% of sodium styrenesulfonate) having a bean-shaped cross-sectional shape, a softening point of 180 to 190°C, a single fiber fineness of 4.4 dtex, a dry heat shrinkage of 30%, and a cut length after crimping of 51 mm

"Scanning Electron Microscope S-3500N" manufactured by Hitachi, Ltd. was used to take all the cross-sectional photographs (SEM photographs) of the fibers of FIGS. 1 to 5.

3. Ground structure constituent fibers (ground yarns)

A multifilament with a total fineness of 334 dtex (a fiber yarn composed of two filaments arranged in parallel, each filament having a fineness of 167 dtex and composed of 50 polyester single fibers) was used. The softening point was 258°C.

The softening point of fibers is a temperature determined in the following manner. 1g of fibers is opened, placed on a hot plate heated to a predetermined temperature, and pressurized with a pressure roller at 0.07 Kgf/cm$^2$ (nip pressure) for three seconds. The temperature at which the surfaces of single fibers in contact with the hot plate are soften and bonded to each other into a plate shape is defined as the softening point of the fibers.

(Example 1)

With use of a sliver knitting machine (circular knitting machine) and the above polyester-based fiber yarns as the ground yarns, a pile fabric of Example 1 was knitted by supplying a pile fiber sliver (10 to 14 g) composed of the pile fibers 1 (guard hairs), the pile fibers 6 (down hairs), and the pile fibers 7 (down hairs) that had been mixed uniformly in a mixing ratio of the pile fibers 1 / pile fibers 6 / pile fibers 7 = 30 / 30/40 (parts by weight). The number of loops in the wale of the ground structure was 16 to 17/inch, and the number of loops in the course of the ground structure was 22 to 33/inch. Next, the pile fibers on the piloerection surface side of the pile fabric were aligned by polishing and shearing. Specifically, first, the pile fibers were polished twice at 120°C, and then sheared twice.

The back surface side of the obtained pile fabric was impregnated with a mixture obtained by mixing a latex of acrylic ester-based resin ("Marpozol M1-K" manufactured by Matsumoto Yushi-Seiyaku Co., Ltd., an emulsified copolymer latex of acrylic ester-based resin, solid concentration: 38.9 wt%) and a latex of acrylic ester-based resin ("TEB-3K" manufactured by Matsumoto Yushi-Seiyaku Co., Ltd., an emulsified copolymer latex of acrylic ester-based resin, solid concentration: 39.1 wt%) in a latex weight ratio (Marpozol M1-K: TEB-3K) of 3 :1 so that 15 g/m$^2$ of the acrylic ester-based resins (solid content) would be adhered to the back surface. Thereafter, the pile fabric was dried for three minutes using a pin tentor drier at an inner drier temperature of 125°C while drawing the width to 160 cm, followed by cooling to 80°C or lower with the width being held at 160 cm. Thereafter, the pile fibers on the front surface side of the pile fabric were aligned by polishing, brushing, and shearing. Specifically, first, the pile fibers were brushed twice, polished once at each of 155°C, 150°C, 145°C, 130°C and 120°C, then sheared twice, and lastly polished twice at 100°C. Consequently, a pile fabric with a weight per unit area of 1100 g/m$^2$ and a maximum pile fiber length at piloerection portion of 45 mm was obtained.

(Example 2)

A pile fabric of Example 2 was produced in the same manner as in Example 1 except that guard hairs were prepared by mixing 10 parts by weight of the pile fibers 2 and 20 parts by weight of the pile fibers 4, instead of using the pile fibers 1.

(Comparative Example 1)

A pile fabric of Comparative Example 1 was produced in the same manner as in Example 1 except that the pile fibers 3 were used instead of the pile fibers 1.

(Comparative Example 2)

A pile fabric of Comparative Example 2 was produced in the same manner as in Example 1 except that the pile fibers 5 were used instead of the pile fibers 1.

The presence and the feeling of standing of the guard hairs in the pile fabric were evaluated in the manner described below. Table 2 below shows the results. Table 2 also shows the average pile lengths of the respective pile portions measured as described above. All of the pile fabrics of Examples 1-2 and Comparative Examples 1-2 were pile fabrics with two levels composed of the long pile portion and the short pile portion.

<Evaluation Method>

1. Appearance of pile fabric: the presence of guard hairs

The presence of the guard hairs in each pile fabric was sensory evaluated by visual observation in terms of visual sense, in accordance with the following criteria.

A: The guard hairs and the down hairs could be visually distinguished, and the presence of the guard hairs was satisfactory.

B: Part of the guard hairs and down hairs could be visually distinguished, and the presence of the guard hairs was acceptable.

C: The guard hairs and the down hairs were visually mixed, and had no presence individually (failure).

2. Touch of pile fabric: the presence of guard hairs

The presence of the guard hairs in each pile fabric was sensory evaluated by touch with hand in terms of touch sense, in accordance with the following criteria.

A: The guard hairs could be perceived individually, and had a presence.
B: Part of the guard hairs could be perceived individually, and had a presence.
C: The guard hairs were soft, and had no presence individually (failure).

3. Feeling of standing hairs

The feeling of standing of the guard hairs in each pile fabric was sensory evaluated in accordance with the following criteria.

A: The standing of the guard hairs from the fabric was perceived after patting the fabric with hand, and the feeling of standing of the guard hairs was satisfactory.
B: The standing of part of the guard hairs from the fabric was perceived after patting the fabric with hand, and the feeling of standing of the guard hairs was acceptable.
C: The guard hairs fell down flat after patting the fabric with hand (failure).

[Table 2]

| | Appearance | Touch | Feeling of standing hairs | Average pile length (mm) | |
|---|---|---|---|---|---|
| | | | | Long pile portion | Short pile portion |
| Ex. 1 | A | A | A | 45 | 25 |
| Ex. 2 | B | B | A | 55 | 25 |
| Comp. Ex. 1 | C | C | C | 75 | 25 |
| Comp. Ex. 2 | C | C | C | 45 | 25 |
| *Ex.: Example, Comp. Ex.: Comparative Example | | | | | |

As can be seen from the results of Table 2 above, in the pile fabrics of Examples 1 and 2 using the modified cross-section fibers A having a specific modified cross-sectional shape and having a single fiber fineness of 15 to 60 dtex as the fibers constituting the long pile portion, individual guard hairs had a strong visual and tactile presence, had an animal hair-like appearance, and had satisfactory feeling of standing hairs.

Meanwhile, in Comparative Example 1, since the fibers having a flat cross section were used as the guard hairs of the pile fabric, the finish of the pile fabric as a whole had a very soft texture, but the visual and tactile presence and the feeling of standing of the guard hairs were inferior to those of the guard hairs of Examples 1 and 2. Moreover, in Comparative Example 2 using the fibers having a C-shaped cross-sectional shape and a single fiber fineness of 10 dtex as the guard hairs, the visual and tactile presence and the feeling of standing of the guard hairs were inferior to those of the guard hairs of Examples 1 and 2.

Description of Reference Numerals

10 laboratory table
11 inclined surface
12 horizontal surface
20 fiber bundle
21, 22 end of fibers (fiber bundle)
30 arrow

**Claims**

1.  A pile fabric comprising a long pile portion and a short pile portion,
    wherein the long pile portion comprises modified cross-section fibers A having one or more cross-sectional shapes selected from the group consisting of C-shaped cross-sectional shapes and H-shaped cross-sectional shapes, and having a single fiber fineness of 15 to 60 dtex.

2.  The pile fabric according to claim 1, wherein both of fibers constituting the long pile portion and fibers constituting the short pile portion are one or more fibers selected from acrylic fibers and modacrylic fibers.

3.  The pile fabric according to claim 1 or 2, wherein the fibers constituting the short pile portion have a single fiber fineness of 1 to 15 dtex.

4.  The pile fabric according to any one of claims 1 to 3, wherein the content of the modified cross-section fibers A in a total weight of fibers constituting pile portions is 5 to 50% by weight.

5.  The pile fabric according to any one of claims 1 to 4, wherein the long pile portion has a longer average pile length than the short pile portion by 5 to 60 mm.

FIG. 1

FIG. 2

FIG. 3

FIG. 4

FIG. 5

FIG. 6

FIG. 7

A

B

FIG. 8

## INTERNATIONAL SEARCH REPORT

| International application No. |
| --- |
| PCT/JP2016/081861 |

A.  CLASSIFICATION OF SUBJECT MATTER
*D04B1/04*(2006.01)i, *D01F6/18*(2006.01)i, *D03D27/00*(2006.01)i

According to International Patent Classification (IPC) or to both national classification and IPC

B.  FIELDS SEARCHED

Minimum documentation searched (classification system followed by classification symbols)
D04B1/04, D01F6/18, D03D27/00

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 60-045610 A  (Kanebo, Ltd.), 12 March 1985 (12.03.1985), claims; example 1; fig. 1; page 3, lower left column (Family: none) | 1-5 |
| Y | JP 03-040832 A  (Toray Industries, Inc.), 21 February 1991 (21.02.1991), claims; page 3, lower column; example 3; fig. 2 (Family: none) | 1-5 |
| Y | JP 03-234844 A  (Teijin Ltd.), 18 October 1991 (18.10.1991), claims; page 2, lower left column; fig. 1, 2 (Family: none) | 1-5 |

☒  Further documents are listed in the continuation of Box C.          ☐  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 11 January 2017 (11.01.17) | Date of mailing of the international search report 24 January 2017 (24.01.17) |
| --- | --- |
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (January 2015)

**INTERNATIONAL SEARCH REPORT**

| International application No. |
| --- |
| PCT/JP2016/081861 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y | JP 07-173709 A (Kuraray Co., Ltd.), 11 July 1995 (11.07.1995), claims; paragraph [0005]; fig. 1 (Family: none) | 1-5 |
| Y | JP 09-111589 A (Toray Industries, Inc.), 28 April 1997 (28.04.1997), claims; fig. 1, 2 (Family: none) | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H101998158959 A
- JP H081996260289 A
- WO 2004009891 A